(19) **Europäisches Patentamt**
**European Patent Office**
**Office européen des brevets**

(11) **EP 4 523 080 B1**

(12) **EUROPEAN PATENT SPECIFICATION**

(45) Date of publication and mention
of the grant of the patent:
**04.02.2026 Bulletin 2026/06**

(21) Application number: **23745413.7**

(22) Date of filing: **07.07.2023**

(51) International Patent Classification (IPC):
**G06F 7/48** $^{(2006.01)}$ **G06F 7/72** $^{(2006.01)}$

(52) Cooperative Patent Classification (CPC):
**G06F 7/72; G06F 7/48; G06F 7/728**

(86) International application number:
**PCT/EP2023/068896**

(87) International publication number:
**WO 2024/013022 (18.01.2024 Gazette 2024/03)**

(54) **COMPUTER-IMPLEMENTED METHOD FOR DETERMINING A GAUSSIAN INTEGER CONGRUENT TO A GIVEN GAUSSIAN INTEGER MODULO A GAUSSIAN INTEGER MODULUS, METHOD FOR DETERMINING A REDUCTION OF A GIVEN GAUSSIAN INTEGER MODULO A GAUSSIAN INTEGER MODULUS AND CRYPTOGRAPHIC METHOD AND ERROR-CORRECTION METHOD**

COMPUTERIMPLEMENTIERTES VERFAHREN ZUR BESTIMMUNG EINER GAUSSSCHEN GANZZAHL, DIE MIT EINER BESTIMMTEN GAUSSSCHEN GANZZAHL MODULO EINES GAUSSSCHEN GANZZAHLMODULS KONGRUENT IST, VERFAHREN ZUR BESTIMMUNG EINER REDUKTION EINER BESTIMMTEN GAUSSSCHEN GANZZAHL MODULO EINES GAUSSSCHEN GANZZAHLMODULS UND KRYPTOGRAFISCHES VERFAHREN UND FEHLERKORREKTURVERFAHREN

PROCÉDÉ MIS EN ŒUVRE PAR ORDINATEUR POUR DÉTERMINER UN ENTIER GAUSSIEN CONGRUENT À UN ENTIER GAUSSIEN DONNÉ MODULO UN MODULE D'ENTIER GAUSSIEN, PROCÉDÉ POUR DÉTERMINER UNE RÉDUCTION D'UN ENTIER GAUSSIEN DONNÉ MODULO UN MODULE D'ENTIER GAUSSIEN ET PROCÉDÉ CRYPTOGRAPHIQUE ET PROCÉDÉ DE CORRECTION D'ERREURS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.07.2022 DE 102022002566**
**29.07.2022 EP 22187804**

(43) Date of publication of application:
**19.03.2025 Bulletin 2025/12**

(73) Proprietor: **Siemens Aktiengesellschaft**
**80333 München (DE)**

(72) Inventors:
• **DE SANTIS, Fabrizio**
**80634 München (DE)**
• **FURCH, Andreas**
**85354 Freising (DE)**

• **SAFIEH, Malek**
**81539 München (DE)**

(74) Representative: **Siemens Patent Attorneys**
**Postfach 22 16 34**
**80506 München (DE)**

(56) References cited:
• **SAFIEH MALEK ET AL: "Montgomery Reduction for Gaussian Integers", CRYPTOGRAPHY, vol. 5, no. 1, 1 February 2021 (2021-02-01), pages 6, XP093045863, DOI: 10.3390/ cryptography5010006**
• **SAFIEH MALEK ET AL: "A Compact Coprocessor for the Elliptic Curve Point Multiplication over Gaussian Integers", ELECTRONICS, vol. 9, no. 12, 2 December 2020 (2020-12-02), pages 2050, XP055857030, DOI: 10.3390/electronics9122050**

• FREUDENBERGER JURGEN ET AL: "New Coding Techniques for Codes over Gaussian Integers", IEEE TRANSACTIONS ON COMMUNICATIONS, IEEE SERVICE CENTER, PISCATAWAY, NJ. USA, vol. 61, no. 8, 1 August 2013 (2013-08-01), pages 3114 - 3124, XP011524422, ISSN: 0090-6778, [retrieved on 20130820], DOI: 10.1109/ TCOMM.2013.061913.120742

**Description**

The invention relates to a computer-implemented method for determining a Gaussian integer congruent to a given Gaussian integer modulo a Gaussian integer modulus and to a method for a complete modulo reduction of a given Gaussian integer with a Gaussian integer modulus. The invention furthermore relates to a computer-implemented cryptographic method and to a computer-implemented error-correction method.

Gaussian integers are a subset of the complex numbers having integers as real and imaginary parts. The set of Gaussian integers together with addition and multiplication modulo a Gaussian integer modulus forms either a ring or a field depending on the choice of the modulus. For this reason, Gaussian integers find applications in error-correcting coding theory, cryptography, and other fields of sciences.

For example, the set of Gaussian integers with addition and multiplication modulo a Gaussian integer modulus $\pi$ forms a finite Gaussian integer field, if $\pi\pi^*=p$ is prime and thus an ordinary integer. Note that the notion $\pi^*$ denotes the complex conjugate of $\pi$. In this case, the resulting Gaussian integer field is isomorphic to the prime field GF($p$) over ordinary integers. Such an isomorphism exists for any prime $p$ congruent to 1 modulo 4.

Like for the case of ordinary integers, the straightforward implementation of a modulo reduction of a given Gaussian integer is typically quite inefficient, because it requires a division of a Gaussian integer followed by a rounding of the result. Hence, more efficient reduction mechanisms for Gaussian integers are needed.

In the fields of cryptography and error-correction codes, congruent solutions with a smaller norm or absolute value than the original given Gaussian integer are heavily used and typically computed relatively inefficient.

The current invention aims at providing a method for an efficient reduction of a given Gaussian integer with a Gaussian integer modulus. Likewise, also a method for determining a Gaussian integer congruent to a given Gaussian integer modulo a Gaussian integer modulus with reduced complexity would be beneficial for many applications. Cryptographic methods and error-correction methods would significantly benefit from efficient reduction methods as mentioned above and are highly desired.

The problem of this invention is solved with a computer-implemented method for determining a Gaussian integer congruent to a given Gaussian integer modulo a Gaussian integer modulus having the features contained in claim 1, with a method for a reduction of a given Gaussian integer with a Gaussian integer modulus having the features contained in claim 13 and with a computer-implemented cryptographic method having the features contained in claim 14 and with a computer-implemented error-correction method having the features contained in claim 15.

Preferred and advantageous aspects of the invention are contained in the respective dependent claims and the subsequent description.

The main idea of the current invention is to provide an efficient reduction method for Gaussian integer moduli that boils down to a sequence of elementary bit operations, hence providing a very fast way to implement modulo reduction (both when using software and/or hardware) for a large class of Gaussian integer moduli.

A classic and direct approach for a modulo reduction of a given Gaussian integer $x$ modulo a Gaussian integer modulus $\pi$ uses a subtraction, three complex multiplications and two integer divisions in total due to a complex division with rounding, that involves an complex multiplication of both nominator and denominator with the complex-conjugate of the denominator,, like shown in the following formula:

$$x \bmod \pi = x - [(x\pi^*)/(\pi\pi^*)] \cdot \pi.$$

Again, the notion $\pi^*$ denotes the complex conjugate of $\pi$, and the square brackets denote the operation of rounding.

A more efficient method for performing a modulo reduction of a given Gaussian integer modulo a Gaussian integer modulus is described in the following article: Safieh, Malek; Freudenberger, Jürgen: "Montgomery Reduction for Gaussian Integers", Cryptography 2021, 5, 6 (https://doi.org/10.3390/cryptography5010006) .

Likewise, fast reduction methods for a special class of ordinary integers are known. However, efficient reduction methods for Gaussian integers are less developed. Thus, the invention in a particularly advantageous aspect addresses the important use case of given Gaussian integers, which are not ordinary integers.

According to this invention, the modulo reduction may be performed in two parts: in a first part, a Gaussian integer congruent replacing the given Gaussian integer is determined, which is smaller than the given Gaussian integer, with respect to a norm such as the absolute value, but congruent to a final reduced result. In a second part, the congruent result may be reduced to obtain the final result of the modulo reduction, which is the correct representative from the Gaussian integer ring or field. Both aspects, the determination of the Gaussian integer congruent and the complete reduction, are subject of the current invention.

In this invention an efficient algorithm for the modulo reduction of given Gaussian integers in two parts as described above is disclosed. The first part is new and leads to different algorithmic steps and arithmetic operations than those described in prior art. This first part may be combined with a second part known from Safieh, Malek; Freudenberger, Jürgen: "Montgomery Reduction for Gaussian Integers", Cryptography 2021, 5, 6 (https://doi.org/10.3390/cryptography5010006) as steps 3 to 11 of Algorithm 2 which constitute prior art.

Both the first and the second part may be combined to perform a full modulo reduction. However, in practice the first part is performed more frequently, particularly during cryptographic computations, while the second part, that may be also referred to as the "*final reduction*" throughout this application, is performed only once at the end to obtain the final desired result, the so-called representative of the Gaussian integer ring or field, which is the result from a modulo reduction. Moreover, the second part is based on computationally intensive comparisons. Thus, the first part aims at reducing the number of these comparisons to decrease the total complexity.

Thus, particularly the novel part of determining a Gaussian integer congruent to a given Gaussian integer modulo a Gaussian integer modulus provides major benefits in the efficiency of modulo reductions of Gaussian integers. Furthermore, it enables a final reduction with reduced complexity, i.e., the final reduction presented as steps 3 to 11 of algorithm 2 in the article: Safieh, Malek; Freudenberger, Jürgen: "Montgomery Reduction for Gaussian Integers", Cryptography 2021, 5, 6 (https://doi.org/10.3390/cryptography5010006) .

The computer-implemented method according to the invention is a method for determining a Gaussian integer congruent to a given Gaussian integer modulo a Gaussian integer modulus. In the method according to the invention, the norm of the Gaussian integer is smaller than the norm of the square of the Gaussian integer modulus. In the method according to the invention, a real integer base raised to a first integer exponent is considered, that has a norm that is larger than the norm of the real part of the Gaussian integer modulus and that is also larger than the norm of the imaginary part of the Gaussian integer modulus. Furthermore, a second integer exponent is considered that is equal to or smaller than -2 and, additionally, a third integer exponent is considered, that is equal to or larger than the first integer exponent incremented by one. A variable value candidate for the Gaussian integer congruent is considered in the method according to the invention that is first initialized with the given Gaussian integer, wherein the Gaussian integer is, either fully or in truncated form, decremented by a multiple of the Gaussian integer modulus, the multiple of the Gaussian integer modulus being evaluated by calculating an auxiliary product of a component-wisely down rounded quotient of the current value of the variable value candidate for the Gaussian integer congruent and the real integer base raised to the sum of the first integer exponent and the second integer exponent with a prefactor and by calculating a component-wisely down rounded quotient of this auxiliary product and the real integer base raised to the difference of the third integer exponent and the second integer exponent and multiplying this last mentioned quotient with the Gaussian integer modulus.

This means, the variable value candidate for the Gaussian integer congruent, that has been initialized with the Gaussian integer, is decremented by a multiple of the Gaussian integer modulus as described above.

"The first integer exponent incremented by one" may preferably also be expressed as "the first integer exponent plus one" or as "the first integer exponent incremented by unity". In other words, "The first integer exponent incremented by one" means the result of adding the number 1 to the first integer exponent.

Hereafter, the resulting variable value candidate for the Gaussian integer congruent determines the Gaussian integer congruent with reduced norm or absolute value, which directly enables the use of the final reduction presented as steps 3 to 11 of algorithm 2 in the article: Safieh, Malek; Freudenberger, Jürgen: "Montgomery Reduction for Gaussian Integers", Cryptography 2021, 5, 6 (https://doi.org/10.3390/cryptography5010006) .

In this context, the wording "Gaussian integer congruent" denotes a Gaussian integer which is congruent to a given Gaussian integer modulo a Gaussian integer modulus. The invention may also be directed to the goal of determining such a Gaussian integer congruent, that has a norm that is smaller than the norm of the given Gaussian integer. Determining such a Gaussian integer congruent directly enables the use of the final reduction presented as steps 3 to 11 of algorithm 2 in the article: Safieh, Malek; Freudenberger, Jürgen: "Montgomery Reduction for Gaussian Integers", Cryptography 2021, 5, 6 (https://doi.org/10.3390/cryptography5010006) .

Thus, in a particular aspect of the invention, the Gaussian integer congruent determined with the method according to the invention has a norm that is smaller than the norm of the given Gaussian integer.

Throughout this application, the terms mentioned below have the following meaning:

The term Gaussian integer modulus denotes a complex modulus, that has an arbitrary form. However, in an advantageous and preferred aspect of the invention, the invention is applied to such a Gaussian integer modulus that is not an ordinary integer. Later on, particularly in the description of preferred embodiments, the Gaussian integer modulus may also be denoted as $\pi$.

Throughout this application, the term given Gaussian integer refers to Gaussian integers, thus including ordinary integers. The given Gaussian integer may be denoted as $z'$ and may initialize the variable value candidate in what follows, particularly in the description of preferred embodiments.

Throughout this application, the term real integer base raised to an integer exponent refers to a base, that is a real integer and that is raised to an exponent, which is an integer. Later on, particularly in the description of preferred embodiments, the real integer base is denoted as $\beta$ and the integer exponent may be denoted by any symbol as apparent from the respective context.

Throughout this application, the term variable value candidate for the congruent denotes a candidate for the congruent, that can take temporary and changing Gaussian integer values during the determination according to the method according to the invention. However, the variable value candidate is - after decrementing - in a preferred aspect of the invention congruent to the given Gaussian integer modulo the Gaussian integer modulus. Later, the variable value candidate for the congruent may be denoted by $z'$, particularly in the description of preferred embodiments.

It is understood, that the phrase "variable value candidate that is decremented by" a quantity means that this quantity is subtracted from the variable value candidate.

The method according to the invention allows a more efficient determination of a Gaussian integer congruent to a given Gaussian integer modulo a Gaussian integer modulus. Advantageously, the method according to the invention involves the computation of quotients that can be performed using computationally efficient digit shifts.

In an advantageous and optional aspect of the method according to the invention, such a second integer exponent is considered that is equal to or smaller than -3 and such a third integer exponent is considered, that is equal to or larger than the first integer exponent incremented by three.

Preferably, in the method according to the invention, the Gaussian integer is decremented by a multiple of the Gaussian integer modulus in a truncated form such that the Gaussian integer is truncated via modulo reduction of the Gaussian integer modulo the real integer base raised to the difference of the third integer exponent and the second integer exponent and the multiple of the Gaussian integer modulus is truncated via modulo reduction of the multiple of the Gaussian integer modulus modulo the real integer base raised to the difference of the third integer exponent and the second integer exponent and subtracted from the truncated Gaussian integer. After subtracting the truncated multiple of the Gaussian integer modulus, the result is considered the decremented Gaussian integer.

Alternatively and also advantageously, the truncation may be performed after decrementing the Gaussian integer.

In a preferred aspect of the method according to the invention, the prefactor is the down-rounded quotient of the real integer base raised to the sum of the first integer exponent and the third integer exponent and the Gaussian integer modulus. Advantageously, this prefactor can be precomputed. Preferably, in the method according to the invention, the prefactor is precomputed.

In a preferred and advantageous aspect of the invention, the norm denotes the absolute value. Hence, in this aspect of the invention, the norm of the variable value candidate means the absolute value of the variable value candidate and the norm of the given Gaussian integer means the absolute value of the given Gaussian integer. In alternative advantageous aspects of the invention, other norms may be used, particularly the Manhattan weight or the absolute square value of the variable value candidate.

In a preferred aspect of the method according to the invention, the method is conducted on a computer that stores numbers in a positional numeral system with a radix, the radix being equal to the real integer base that, in this aspect of the invention, constitutes an ordinary integer base or the real integer base is the radix raised to an integer number. In this aspect of the invention, the radix of the positional numeral system directly matches the real integer base or the radix of the positional numeral system raised to the integer number matches the real integer base. Hence, many operations in this algorithm may be conducted with positional shifts of digits in the positional numeral system. In this particularly useful aspect of the invention, the computational benefits which the invention provides are directly used and appropriated when conducting the method.

In a particular beneficial aspect of the method according to the invention the real integer base is an ordinary integer, particularly 2 or 2 raised to an integer power.

Thus, the method is directly applicable in computers that store numbers as binary numbers. Since this positional numeral system is widely used in the computational domain, particularly this aspect of the invention addresses almost all computational architectures currently available.

In an advantageous and preferred aspect of the invention, in the method the Gaussian integer is reduced using a final reduction.

In a preferred aspect of the invention, the component-wisely down rounded quotient involves operations that may be performed particularly efficient with a shift of digits to the right direction. For the real integer base being 2 or 2 raised to an integer number, and a binary numeral system, this operation may be performed with low computational costs by applying conventional bit shifts to the right by a number of digits, particularly by a number of digits that preferably equals to the logarithm of the denominator of the respective quotient to the base 2 or - for other than binary numeral systems - to the base that equals the radix of the numeral system.

The component-wise down rounding of the quotient may be easily achieved by applying digit shifts to the right direction, respectively.

In the computer-implemented method for a reduction of a given Gaussian integer with a Gaussian integer modulus, at first a Gaussian integer congruent to a modulo reduction of a given Gaussian integer with the Gaussian integer modulus is determined with the method as described above and subsequently, the Gaussian integer congruent is further reduced with a final reduction. A part of the Montgomery reduction, namely the final part given by the steps 3 to 11 of algorithm 2 in the article: Safieh, Malek; Freudenberger, Jürgen: "Montgomery Reduction for Gaussian Integers", Cryptography 2021, 5, 6 (https://doi.org/10.3390/cryptography5010006), constitutes a known reduction which - in combination with the method for determining a Gaussian integer congruent to a modulo reduction of a given Gaussian integer modulo a complex modulus - results in a computationally efficient reduction of Gaussian integers.

The computer-implemented cryptographic method according to the invention is particularly a method for generating a cryptographic key and/or for encryption or decryption. In the method according to the invention the cryptographic method involves determining a Gaussian integer congruent to a given Gaussian integer modulo a Gaussian integer modulus and/or determining a reduction of a given Gaussian integer modulo a Gaussian integer modulus and the Gaussian integer congruent to the given Gaussian integer modulo the Gaussian integer modulus is determined using a method as described above and/or the reduction of the given Gaussian integer modulo the Gaussian integer modulus is determined using a method as described above.

In the computer-implemented error-correction method according to the invention, the error-correction method involves determining a Gaussian integer congruent to a given Gaussian integer modulo a Gaussian integer modulus and/or a reduction of a given Gaussian integer modulo a Gaussian integer modulus and the Gaussian integer congruent to the given Gaussian integer modulo the Gaussian integer modulus is determined using a method as described above and/or the reduction of the given Gaussian integer modulo the Gaussian integer modulus is evaluated using a method as described above.

In the following, embodiments of the invention are described in more detail for a processor that operates with a binary numeral system:

The reduction algorithm is described below as algorithm 1 and contains in steps 1 to 4 the method for determining a congruent to a modulo reduction of a given Gaussian integer with a Gaussian integer modulus according to the invention. This method represents the first part of algorithm 1. The second part of algorithm 1 is constituted by a final reduction to determine the correct representative from the Gaussian integer ring or field as used in the Montgomery method. Part 1 and part 2 together form the method for a desired reduction of a given Gaussian integer with a Gaussian integer modulus according to the invention.

The full reduction algorithm according to algorithm 1 targets Gaussian integer moduli of the form $\pi = a + bi$, where $|a| < |\beta^k|$ and $|b| < |\beta^k|$ on input $|z'| < |\pi^2|$. For efficient processing, a quantity $\mu = \beta^{k+\delta}$ div $\pi$ is introduced, that can be precomputed and stored. The real integer base $\beta$ in this example is equal to 2 or equal to 2 raised to an integer number:

```
Algorithm 1:
Input: μ, β, π, γ, δ and x.
Output: z = z' mod π
1: q₁ = z' div β^(k+δ)
     //Right-Shift of Re{q₁} and Im{q₁} by log₂(β^(k+δ))
2: q₂ = q₁μ
3: q3 = q₂ div β^(γ−δ)
     //right shift of Re{q₃} and Im{q₃} by log₂(β^(γ−δ))
4: z'=z' − q₃π
5: if(|z'|> (√2 −1)•|π|/√2) then
6:    z = z'
7: else if (|z'| > |π|/√2) then
8:    α' = argmin_{â∈{0, ±1, ±i}} |z' − âπ|
9:    z = z' − α'π
10: else
11:    α'' = argmin_{â∈{0, ±1, ±i, ±1±i}} |z' − âπ|
12:    z = z' − α''π
13: end if
14: return z
```

In the first part in step 1 to 4, a Gaussian integer z' is determined, which is congruent to the correct result of the complete or desired ordinary modulo reduction. Since in the present example, the real integer base in algorithm 1 is equal to 2 or to a power of 2, the evaluation of step 1 and 3 only requires bit shifts into the right direction for the real and the imaginary part. The second part in steps 5 to 13, also called the final reduction throughout this application, uniquely determines the correct final result, which is the correct representative from the Gaussian integer field or ring, using the final reduction for Gaussian integers as described in steps 3 to 11 of algorithm 2 in Safieh, Malek; Freudenberger, Jürgen: "Montgomery Reduction for Gaussian Integers", Cryptography 2021, 5, 6 as referenced in the previous description, the content of which is hereby included by reference.

Several cases, the algorithm 1 may be applied to, are distinguished in the following:

In this example and typically, the real integer base $\beta$ is an ordinary integer base, here e. g. the ordinary integer $\beta = 2$ or 2 raised to an integer power. In the particular example described here, the real integer base $\beta$ is 2 raised to such an integer power, that the exponentiation results in the word size of the used processor, e. g. 64 for a 64-bit processor. Due to the choice of the integer base $\beta$, steps 1 and 3 in algorithm 1, respectively, involve simply bit shifts to the right direction and a truncation. Furthermore, the evaluation of the difference of the Gaussian integer z' and the multiple of the Gaussian integer modulus involves a complex multiplication which may not induce much computational costs.

In algorithm 1, the absolute value of the Gaussian integer is smaller than the absolute value of the square of the Gaussian integer modulus. In other words, the Gaussian integer is smaller in absolute value than the square of the Gaussian integer modulus.

A first integer exponent, in algorithm 1 also denoted as $k$, is chosen such, that the real integer base $\beta$ raised to the first integer exponent $k$, $\beta^k$, has a norm, that is larger than the norm of the real part of the Gaussian integer modulus: $|a| < |\beta^k|$. The real integer base $\beta$ raised to the first integer exponent additionally has a norm that is larger than the norm of the imaginary part of the Gaussian integer modulus $\pi$: $|b| < |\beta^k|$.

Furthermore, for the evaluation of steps 1 to 4, a second integer exponent $\delta$ is considered that is equal to or smaller than -2. A third integer exponent $\gamma$ is considered, that is equal to or larger than the first integer exponent raised by one. A variable value candidate for the Gaussian integer congruent is considered that is first initialized with the given Gaussian integer z'. In algorithm 1, the variable value candidate for the Gaussian integer congruent is decremented by a multiple $q_3\pi$ of the Gaussian integer modulus $\pi$ in step 4, $z' = z'-q_3\pi$. For this step 4, the multiple $q_3\pi$ of the Gaussian integer modulus is evaluated by calculating an auxiliary product (z' div $\beta^{k+\delta}$)$\mu$ in step 2 of a component-wisely down rounded quotient z' div $\beta^{k+\delta}$ of the current value of the variable value candidate z' for the Gaussian integer congruent and the real integer base $\beta$ raised to the sum $k+\delta$ of the first integer exponent $k$ and the second integer exponent $\delta$, $\beta^{k+\delta}$, obtained in step 1 with a prefactor, $\mu$, and by calculating, in step 3, a down rounded quotient of this auxiliary product $q_2 = $ (z' div $\beta^{k+\delta}$)$\mu$ and the real integer base raised to the difference of the third inter exponent and the second integer exponent $q3 = q_2$ div $\beta^{\gamma-\delta}$ and by multiplying this last down rounded quotient $q_3$ with the integer modulus $\pi$. The prefactor $\mu = \beta^{k+\gamma}$ div $\pi$ may be precomputed and stored.

In other examples, other norms may be used instead of the absolute value, such as the Manhattan weight or the absolute square value.

A further embodiment of the method according to the invention deviates from the embodiments described above in those aspects explicitly mentioned hereafter and corresponds to the previous embodiments in all other aspects.

In this further embodiment, the variable value candidate for the Gaussian integer congruent is decremented by a multiple $q_3\pi$ of the Gaussian integer modulus $\pi$ in step 4 not in its full form involving all digits, but the decrementing is carried out on a truncated version of the Gaussian integer with a truncated version of the multiple $q_3\pi$ of the Gaussian integer modulus $\pi$ in step 4. In other words, the relation $z' = z'\mathrm{mod}\,\beta^{\gamma-\delta}-q_3\pi \bmod \beta^{\gamma-\delta}$ applies for step 4 instead of the previous step 4 $z' = z'-q_3\pi$ of previous embodiments. Furthermore, for the evaluation of steps 1 to 4, the second integer exponent $\delta$ is not only equal to or smaller than -2, but the second integer exponent $\delta$ satisfies the even stronger condition of being equal to or smaller than -3, i. e. $\delta \leq -3$. The third integer exponent $\gamma$ also satisfies an even stronger condition than in the previous embodiments in that it is equal to or larger than the first integer exponent incremented by three, i. e. $\gamma \geq k+3$.

## Claims

1. Computer-implemented method for determining a Gaussian integer congruent to a given Gaussian integer modulo a Gaussian integer modulus, wherein the norm of the Gaussian integer is smaller than the norm of the square of the Gaussian integer modulus, wherein

    - a real integer base raised to a first integer exponent having a norm larger than that of the real and larger than that of the imaginary part of the Gaussian integer modulus is considered, wherein a second integer exponent is considered that is equal to or smaller than -2 and wherein a third integer exponent is considered, that is equal to or larger than the first integer exponent incremented by one, and wherein a variable value candidate for the Gaussian integer congruent is considered that is
- first initialized with the given Gaussian integer and then, either fully or in truncated form, decremented by a multiple of the Gaussian integer modulus, wherein the multiple of the Gaussian integer modulus is evaluated by calculating an auxiliary product of a component-wisely down rounded quotient of the current value of the variable value candidate for the Gaussian integer congruent and the real integer base raised to the sum of the first integer exponent and the second integer exponent with a prefactor and by calculating a component-wisely down rounded quotient of this auxiliary product and the real integer base raised to the difference of the third integer exponent and the second integer exponent and multiplying this latter quotient with the Gaussian integer modulus, and wherein the resulting variable value candidate for the Gaussian integer congruent determines the Gaussian integer congruent.

2. Method according to claim 1, wherein such a second integer exponent is considered that is equal to or smaller than -3 and such a third integer exponent is considered, that is equal to or larger than the first integer exponent incremented by three.

3. Method according to one of the preceding claims, particularly according to claim 2, wherein the Gaussian integer is decremented by a multiple of the Gaussian integer modulus in a truncated form such that the Gaussian integer is truncated via modulo reduction of the Gaussian integer modulo the real integer base raised to the difference of the third integer exponent and the second integer exponent and then the multiple of the Gaussian integer modulus is truncated via modulo reduction of the multiple of the Gaussian integer modulus modulo the real integer base raised to the difference of the third integer exponent and the second integer exponent and subtracted from the truncated Gaussian integer.

4. Method according to one of the preceding claims, wherein the prefactor is the down rounded quotient of the real integer base raised to the sum of the first integer exponent and the third integer exponent and the Gaussian integer modulus.

5. Method according to one of the preceding claims, wherein the norm of the determined Gaussian integer congruent is smaller than the norm of the given Gaussian integer.

6. Method according to one of the preceding claims, wherein the norm denotes the absolute value.

7. Method according to one of the claims 1 to 5, wherein the norm denotes the Manhattan weight or the absolute square value.

8. Method according to one of the preceding claims, wherein the method is conducted on a computer that stores numbers in a positional numeral system with a radix, wherein the radix is equal to the real integer base or where a radix raised to an integer power is equal to the real integer base.

9. Method according to one of the preceding claims, wherein the real integer base is an ordinary integer base and is preferably 2 or 2 raised to an integer power.

10. Method according to one of the preceding claims, which is carried out on a processor with a word-size, the real integer base being equal to the word-size of the processor, particularly 16 or 32 or 64 or 128.

11. Method according to one of the preceding claims, wherein the Gaussian integer congruent is reduced using a final reduction.

12. Method according to one of the preceding claims, wherein the down rounded fractions are evaluated involving bit shifting by an integer number of bits and involving bit truncation down to an integer number of bits.

13. Computer-implemented method for determining a reduction of a given Gaussian integer modulo a Gaussian integer modulus, wherein first a Gaussian integer congruent to a modulo reduction of a given Gaussian integer modulo a Gaussian integer modulus is determined with the method according to one of the preceding claims and the Gaussian integer congruent is further reduced with a final reduction.

14. Computer-implemented cryptographic method, particularly for generating a cryptographic key and/or for encryption or decryption, wherein the cryptographic method involves determining a Gaussian integer congruent to a given Gaussian integer modulo a Gaussian integer modulus and/or determining a reduction of a given Gaussian integer modulo a Gaussian integer modulus and wherein the Gaussian integer congruent to the given Gaussian integer modulo the Gaussian integer modulus is determined using a method according to one of the claims 1 to 12 and/or wherein the reduction of the given Gaussian integer modulo the Gaussian integer modulus is determined using a method according to claim 13.

15. Computer-implemented error-correction method, wherein the error-correction method involves determining a Gaussian integer congruent to a given Gaussian integer modulo a Gaussian integer modulus and/or determining a reduction of a given Gaussian integer modulo a Gaussian integer modulus and wherein Gaussian integer congruent to the given Gaussian integer modulo the Gaussian integer modulus is determined using a method according to one of the claims 1 to 10 and/or wherein the reduction of the given Gaussian integer modulo the Gaussian integer modulus is determined using a method according to claim 13.

**Patentansprüche**

1. Computerimplementiertes Verfahren zum Bestimmen einer Gaußschen Zahl, die kongruent zu einer gegebenen Gaußschen Zahl modulo einem Gaußschen Zahl-Modul ist, wobei die Norm der Gaußschen Zahl kleiner ist als die Norm des Quadrats des Gaußschen Zahl-Moduls, wobei

   - eine reelle ganzzahlige Basis, die zu einem ersten ganzzahligen Exponenten potenziert ist, der eine Norm aufweist, die größer ist als die des Realteils und größer ist als die des Imaginärteils des Gaußschen Zahl-Moduls, betrachtet wird, wobei ein zweiter ganzzahliger Exponent betrachtet wird, der gleich oder kleiner als -2 ist, und wobei ein dritter ganzzahliger Exponent betrachtet wird, der gleich oder größer als der erste ganzzahlige Exponent inkrementiert um eins ist, und wobei ein variabler Wertkandidat für die kongruente Gaußsche Zahl betrachtet wird, der
   - zuerst mit der gegebenen Gaußschen Zahl initialisiert wird und dann, entweder vollständig oder in verkürzter Form, um ein Vielfaches des Gaußschen Zahl-Moduls dekrementiert wird, wobei das Vielfache des Gaußschen Zahl-Moduls durch Berechnen eines Hilfsprodukts eines komponentenweise abgerundeten Quotienten des aktuellen Werts des variablen Wertkandidaten für die kongruente Gaußsche Zahl und der reellen ganzzahligen Basis, die zur Summe des ersten ganzzahligen Exponenten und des zweiten ganzzahligen Exponenten potenziert ist, mit einem Vorfaktor und durch Berechnen eines komponentenweise abgerundeten Quotienten dieses Hilfsprodukts und der reellen ganzzahligen Basis, die zur Differenz des dritten ganzzahligen Exponenten und des zweiten ganzzahligen Exponenten potenziert ist, und Multiplizieren dieses letzteren Quotienten mit dem Gaußschen Zahl-Modul ausgewertet wird, und wobei der resultierende variable Wertkandidat für die kongruente Gaußsche Zahl die kongruente Gaußsche Zahl bestimmt.

2. Verfahren nach Anspruch 1, wobei ein solcher zweiter ganzzahliger Exponent betrachtet wird, der gleich oder kleiner als -3 ist, und ein solcher dritter ganzzahliger Exponent betrachtet wird, der gleich oder größer als der erste ganzzahlige Exponent inkrementiert um drei ist.

3. Verfahren nach einem der vorhergehenden Ansprüche, insbesondere nach Anspruch 2, wobei die Gaußsche Zahl um ein Vielfaches des Gaußschen Zahl-Moduls in einer verkürzten Form dekrementiert wird, derart, dass die Gaußsche Zahl über Moduloreduktion der Gaußschen Zahl modulo der reellen ganzzahligen Basis, die zur Differenz des dritten ganzzahligen Exponenten und des zweiten ganzzahligen Exponenten potenziert ist, verkürzt wird und dann das Vielfache des Gaußschen Zahl-Moduls über Moduloreduktion des Vielfachen des Gaußschen Zahl-Moduls modulo der reellen ganzzahligen Basis, die zur Differenz des dritten ganzzahligen Exponenten und des zweiten ganzzahligen Exponenten potenziert ist, verkürzt und von der verkürzten Gaußschen Zahl subtrahiert wird.

4. Verfahren nach einem der vorhergehenden Ansprüche, wobei der Vorfaktor der abgerundete Quotient der reellen ganzzahligen Basis, die zur Summe des ersten ganzzahligen Exponenten und des dritten ganzzahligen Exponenten potenziert ist, und des Gaußschen Zahl-Moduls ist.

5. Verfahren nach einem der vorhergehenden Ansprüche, wobei die Norm der bestimmten kongruenten Gaußschen Zahl kleiner ist als die Norm der gegebenen Gaußschen Zahl.

6. Verfahren nach einem der vorhergehenden Ansprüche, wobei die Norm den Absolutwert bezeichnet.

7. Verfahren nach einem der Ansprüche 1 bis 5, wobei die Norm das Manhattan-Gewicht oder den absoluten Quadratwert bezeichnet.

8. Verfahren nach einem der vorhergehenden Ansprüche, wobei das Verfahren auf einem Computer durchgeführt wird, der Zahlen in einem Stellenwertsystem mit einer Radix speichert, wobei die Radix gleich der reellen ganzzahligen Basis ist oder wobei eine Radix, die zu einer ganzzahligen Potenz potenziert ist, gleich der reellen ganzzahligen Basis ist.

9. Verfahren nach einem der vorhergehenden Ansprüche, wobei die reelle ganzzahlige Basis eine gewöhnliche ganzzahlige Basis ist und vorzugsweise 2 oder 2 potenziert zu einer ganzzahligen Potenz ist.

10. Verfahren nach einem der vorhergehenden Ansprüche, das auf einem Prozessor mit einer Wortgröße durchgeführt wird, wobei die reelle ganzzahlige Basis gleich der Wortgröße des Prozessors ist, insbesondere 16 oder 32 oder 64 oder 128.

11. Verfahren nach einem der vorhergehenden Ansprüche, wobei die kongruente Gaußsche Zahl unter Verwendung einer Endreduktion reduziert wird.

12. Verfahren nach einem der vorhergehenden Ansprüche, wobei die abgerundeten Brüche unter Einbeziehung von Bitverschiebung um eine ganzzahlige Anzahl von Bits und unter Einbeziehung von Bitabschneidung auf eine ganzzahlige Anzahl von Bits ausgewertet werden.

13. Computerimplementiertes Verfahren zum Bestimmen einer Reduktion einer gegebenen Gaußschen Zahl modulo einem Gaußschen Zahl-Modul, wobei zuerst eine Gaußsche Zahl, die kongruent zu einer Moduloreduktion einer gegebenen Gaußschen Zahl modulo einem Gaußschen Zahl-Modul ist, mit dem Verfahren nach einem der vorhergehenden Ansprüche bestimmt wird und die kongruente Gaußsche Zahl mit einer Endreduktion weiter reduziert wird.

14. Computerimplementiertes kryptographisches Verfahren, insbesondere zum Erzeugen eines kryptographischen Schlüssels und/oder zur Verschlüsselung oder Entschlüsselung, wobei das kryptographische Verfahren das Bestimmen einer Gaußschen Zahl, die kongruent zu einer gegebenen Gaußschen Zahl modulo einem Gaußschen Zahl-Modul ist, und/oder das Bestimmen einer Reduktion einer gegebenen Gaußschen Zahl modulo einem Gaußschen Zahl-Modul umfasst und wobei die Gaußsche Zahl, die kongruent zu der gegebenen Gaußschen Zahl modulo dem Gaußschen Zahl-Modul ist, unter Verwendung eines Verfahrens nach einem der Ansprüche 1 bis 12 bestimmt wird und/oder wobei die Reduktion der gegebenen Gaußschen Zahl modulo dem Gaußschen Zahl-Modul unter Verwendung eines Verfahrens nach Anspruch 13 bestimmt wird.

15. Computerimplementiertes Fehlerkorrekturverfahren, wobei das Fehlerkorrekturverfahren das Bestimmen einer Gaußschen Zahl, die kongruent zu einer gegebenen Gaußschen Zahl modulo einem Gaußschen Zahl-Modul ist, und/oder das Bestimmen einer Reduktion einer gegebenen Gaußschen Zahl modulo einem Gaußschen Zahl-Modul umfasst und wobei die Gaußsche Zahl, die kongruent zu der gegebenen Gaußschen Zahl modulo dem Gaußschen Zahl-Modul ist, unter Verwendung eines Verfahrens nach einem der Ansprüche 1 bis 10 bestimmt wird und/oder wobei die Reduktion der gegebenen Gaußschen Zahl modulo dem Gaußschen Zahl-Modul unter Verwendung eines Verfahrens nach Anspruch 13 bestimmt wird.

**Revendications**

1. Procédé mis en œuvre par ordinateur pour déterminer un entier gaussien congruent à un entier gaussien donné modulo un module d'entier gaussien, dans lequel la norme de l'entier gaussien est inférieure à la norme du carré du module d'entier gaussien, dans lequel

   - une base entière réelle élevée à un premier exposant entier ayant une norme supérieure à celle de la partie réelle et supérieure à celle de la partie imaginaire du module d'entier gaussien est considérée, dans lequel un deuxième exposant entier est considéré qui est inférieur ou égal à -2 et dans lequel un troisième exposant entier est considéré, qui est supérieur ou égal au premier exposant entier incrémenté de un, et dans lequel une valeur variable candidate pour l'entier gaussien congruent est considérée qui est
   - premièrement initialisée avec l'entier gaussien donné, puis, soit complètement soit sous forme tronquée, décrémentée d'un multiple du module d'entier gaussien, dans lequel le multiple du module d'entier gaussien est évalué par le calcul d'un produit auxiliaire d'un quotient arrondi par défaut composante par composante de la valeur actuelle de la valeur variable candidate pour l'entier gaussien congruent et de la base entière réelle élevée à la somme du premier exposant entier et du deuxième exposant entier avec un préfacteur et par le calcul d'un quotient arrondi par défaut composante par composante de ce produit auxiliaire et de la base entière réelle élevée à la différence du troisième exposant entier et du deuxième exposant entier et la multiplication de ce dernier quotient par le module d'entier gaussien, et dans lequel la valeur variable candidate résultante pour l'entier gaussien congruent détermine l'entier gaussien congruent.

2. Procédé selon la revendication 1, dans lequel un tel deuxième exposant entier est considéré qui est inférieur ou égal à -3, et un tel troisième exposant entier est considéré qui est supérieur ou égal au premier exposant entier incrémenté de trois.

3. Procédé selon l'une des revendications précédentes, en particulier selon la revendication 2, dans lequel l'entier gaussien est décrémenté d'un multiple du module d'entier gaussien sous forme tronquée, de sorte que l'entier gaussien soit tronqué par réduction modulo de l'entier gaussien modulo la base entière réelle élevée à la différence du troisième exposant entier et du deuxième exposant entier, puis le multiple du module d'entier gaussien est tronqué par réduction modulo du multiple du module d'entier gaussien modulo la base entière réelle élevée à la différence du troisième exposant entier et du deuxième exposant entier, et ensuite soustrait de l'entier gaussien tronqué.

4. Procédé selon l'une des revendications précédentes, dans lequel le préfacteur est le quotient arrondi par défaut de la base entière réelle élevée à la somme du premier exposant entier et du troisième exposant entier et du module d'entier gaussien.

5. Procédé selon l'une des revendications précédentes, dans lequel la norme de l'entier gaussien congruent déterminé est inférieure à la norme de l'entier gaussien donné.

6. Procédé selon l'une des revendications précédentes, dans lequel la norme désigne la valeur absolue.

7. Procédé selon l'une des revendications 1 à 5, dans lequel la norme désigne le poids de Manhattan ou la valeur absolue au carré.

8. Procédé selon l'une des revendications précédentes, dans lequel le procédé est exécuté sur un ordinateur qui stocke des nombres dans un système de numération positionnelle avec un radix, dans lequel le radix est égal à la base entière réelle ou dans lequel un radix élevé à une puissance entière est égal à la base entière réelle.

9. Procédé selon l'une des revendications précédentes, dans lequel la base entière réelle est une base entière ordinaire, et est de préférence égale à 2 ou à 2 élevé à une puissance entière.

10. Procédé selon l'une des revendications précédentes, qui est mis en œuvre sur un processeur ayant une taille de mot, la base entière réelle étant égale à la taille de mot du processeur, en particulier 16 ou 32 ou 64 ou 128.

11. Procédé selon l'une des revendications précédentes, dans lequel l'entier gaussien congruent est réduit en utilisant une réduction finale.

12. Procédé selon l'une des revendications précédentes, dans lequel les fractions arrondies par défaut sont évaluées en impliquant un décalage de bits d'un nombre entier de bits et en impliquant une troncature de bits jusqu'à un nombre entier de bits.

13. Procédé mis en œuvre par ordinateur pour déterminer une réduction d'un entier gaussien donné modulo un module d'entier gaussien, dans lequel un entier gaussien congruent à une réduction modulo d'un entier gaussien donné modulo un module d'entier gaussien est d'abord déterminé avec le procédé selon l'une des revendications précédentes, et l'entier gaussien congruent est ensuite réduit avec une réduction finale.

14. Procédé cryptographique mis en œuvre par ordinateur, en particulier pour la génération d'une clé cryptographique et/ou pour le chiffrement ou le déchiffrement, dans lequel le procédé cryptographique comprend la détermination d'un entier gaussien congruent à un entier gaussien donné modulo un module d'entier gaussien et/ou la détermination d'une réduction d'un entier gaussien donné modulo un module d'entier gaussien, et dans lequel l'entier gaussien congruent à l'entier gaussien donné modulo le module d'entier gaussien est déterminé en utilisant un procédé selon l'une des revendications 1 à 12 et/ou dans lequel la réduction de l'entier gaussien donné modulo le module d'entier gaussien est déterminée en utilisant un procédé selon la revendication 13.

15. Procédé de correction d'erreurs mis en œuvre par ordinateur, dans lequel le procédé de correction d'erreurs comprend la détermination d'un entier gaussien congruent à un entier gaussien donné modulo un module d'entier gaussien et/ou la détermination d'une réduction d'un entier gaussien donné modulo un module d'entier gaussien, et dans lequel l'entier gaussien congruent à l'entier gaussien donné modulo le module d'entier gaussien est déterminé en utilisant un procédé selon l'une des revendications 1 à 10 et/ou dans lequel la réduction de l'entier gaussien donné modulo le module d'entier gaussien est déterminée en utilisant un procédé selon la revendication 13.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAFIEH, MALEK** ; **FREUDENBERGER, JÜRGEN**. Montgomery Reduction for Gaussian Integers. *Cryptography*, 2021, vol. 5, 6, https://doi.org/10.3390/-cryptography5010006

- **SAFIEH, MALEK** ; **FREUDENBERGER, JÜRGEN**. Montgomery Reduction for Gaussian Integers. *Cryptography*, 2021, vol. 5, 6